# EUROPEAN PATENT APPLICATION

(11) **EP 4 851 060 A1**
(43) Date of publication of application: **09.12.2026**
(21) Application number: 25748147.3
(22) Date of filing: 27.01.2025
(51) Int. Cl.: B65D 35/10, B29C 51/08, B29C 51/26

(54) **TUBE CONTAINER, MANDREL, AND METHOD FOR MANUFACTURING TUBE CONTAINER**

(30) Priority: 31.01.2024 JP 2024012599; 31.01.2024 JP 2024012598
(71) Applicant: Yoshino Kogyosho Co., Ltd., Koto-ku Tokyo 136-8531 (JP)
(72) Inventor: TOHNAI Yoshiaki, Tokyo 136-8531 (JP); FUKUDA Tomoki, Isesaki-shi Gunma 372-0854 (JP)
(74) Representative: TBK
(86) International application number: PCT/JP2025/002399
(87) International publication number: WO 2025/164565

(57) **Abstract**

In a tube container, curvature radius of four corner portions of a sleeve is made small, fixing strength between the sleeve and a head is secured, and furthermore deformation of the sleeve during forming is prevented.

The tube container includes: a flange portion (21) in which a peripheral edge portion (17a) is fixed to one end portion (13a), the one end portion (13a) extends linearly in an axial direction, and the peripheral edge portion (17a) is fixed to an axial end surface (13c) of the one end portion (13a); and an outer peripheral portion (22) fixed to an inner peripheral surface (13d) of the one end portion (13a). A head (14) includes an annular protruding portion (23) protruding downward from a base portion (15), an outer peripheral surface (23a) of the protruding portion (23) is fixed to the inner peripheral surface (13d) of the one end portion (13a), and, on the inner surface side of four corner portions (25), a protruding-portion inner peripheral surface (23b), i.e., the inner peripheral surface of the protruding portion (23), is an inclined surface extending linearly so as to be gradually positioned radially outward toward a lower side.

## Description

### Technical Field

The present invention relates to a tube container, a mandrel, and a method for manufacturing a tube container.

### Background Art

Tube containers including a tubular sleeve and a head that has a mouth portion and closes an opening at one end portion of the sleeve, with a peripheral edge portion of the head fixed to the one end portion of the sleeve, have been known (see, for example, Patent Literature 1). In the container in Patent Literature 1, one end portion of the sleeve is formed as a bent portion, in which an upper end portion of the sleeve is bent radially inward, and the bent portion is fixed to the peripheral edge portion of the head. As a result, a large fixing area between the one end portion of the sleeve and the peripheral edge portion of the head is secured, and high fixing strength is obtained.

### Citation List

### Patent Literature

Patent Literature 1: JP 2003-40293 A

### Summary of Invention

### Technical Problem

Incidentally, tube containers in which a portion of the sleeve connected to the head has a quadrangular shape with four corner portions as viewed in the axial direction are generally known. For aesthetic reasons, it is sometimes desirable to make the curvature radius of the four corner portions of such a tube container small. However, when the curvature radius of the corner portions is made small in the above conventional structure, in which the bent portion provided in the sleeve is fixed to the head, defects easily occur in the shape of the sleeve at the corner portions during forming of the tube container. This can result in phenomena such as the head material flowing around the outside of the sleeve, or wrinkles forming in the sleeve at the bent portion. On the other hand, if the bent portion is not provided in the sleeve, it is difficult to secure the fixing strength between the sleeve and the head.

In addition, the four corner portions can be formed in the sleeve by inserting a mandrel with four corner portions for forming into the sleeve, but the mandrel can be caught by the corner portions of the sleeve when the mandrel is inserted into the sleeve, which can deform the sleeve. In particular, when the curvature radius of the four corner portions of the mandrel is small, the mandrel is easily caught by the corner portions of the sleeve. Therefore, it is desirable to prevent the sleeve from being deformed by the mandrel.

In view of the above, an object of the present invention is to make the curvature radius of the four corner portions of a sleeve of a tube container small, secure the fixing strength between the sleeve and a head, and prevent deformation of the sleeve during forming of the sleeve.

### Solution to Problem

A tube container includes: a tubular sleeve; and a head including a plate-shaped base portion and a mouth portion erected from the base portion, and closing an opening at one end portion of the sleeve, the base portion having a peripheral edge portion fixed to the one end portion, the sleeve being formed in a quadrangular shape with four corner portions as viewed from the head side in an axial direction of the sleeve, in which the one end portion extends linearly in the axial direction of the sleeve, the peripheral edge portion includes a flange portion fixed to an axial end surface of the one end portion and an outer peripheral portion fixed to an inner peripheral surface of the one end portion, the head includes an annular protruding portion protruding downward from the base portion, an outer peripheral surface of the protruding portion is fixed to the inner peripheral surface of the one end portion below the outer peripheral portion, and, on an inner surface side of the four corner portions, a protruding-portion inner peripheral surface being an inner peripheral surface of the protruding portion is an inclined surface extending linearly so as to be positioned radially outward toward a lower side.

A mandrel to be used for manufacturing the tube container includes: a forming corner portion to form the corner portions; a head forming portion having a shape following the head; and a protruding-portion forming portion provided on an outer peripheral portion of the head forming portion to form the protruding portion, in which the protruding-portion forming portion is a linear chamfered portion following the protruding-portion inner peripheral surface.

A method for manufacturing a tube container using the mandrel includes: an insertion step of inserting the mandrel into the sleeve via the protruding-portion forming portion; and a forming step of forming the corner portions by the forming corner portion, forming a material of the head using a cavity formed between a mold and the mandrel to form the head, and fixing the peripheral edge portion and the protruding portion to the one end portion.

### Advantageous Effects of Invention

According to the present invention, it is possible to make the curvature radius of the four corner portions of a sleeve of a tube container small, secure the fixing strength between the sleeve and a head, and prevent deformation of the sleeve during forming of the sleeve.

### Brief Description of Drawings

Fig. 1 illustrates a side view of a tube container according to a first embodiment of the present invention.
Fig. 2 illustrates a plan view of the tube container as viewed from above.
Fig. 3 illustrates a cross-sectional view of the tube container.
Fig. 4 illustrates a view for explaining an example of a method for manufacturing a container body.
Fig. 5A illustrates a side view of a mandrel.
Fig. 5B illustrates a bottom view of the mandrel as viewed from below.
Fig. 6 illustrates an enlarged cross-sectional view of a connection portion between a head and a sleeve in a second embodiment.

### Description of Embodiments

### First Embodiment

Hereinafter, an embodiment of a tube container according to the present invention will be described with reference to the drawings.

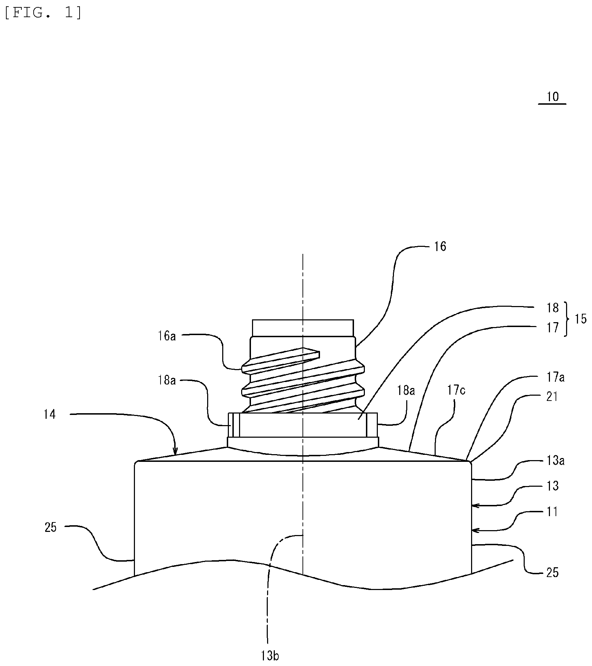

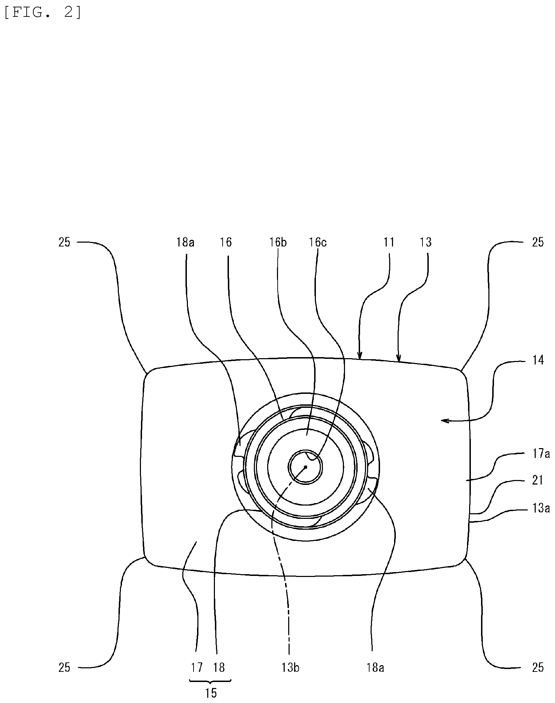

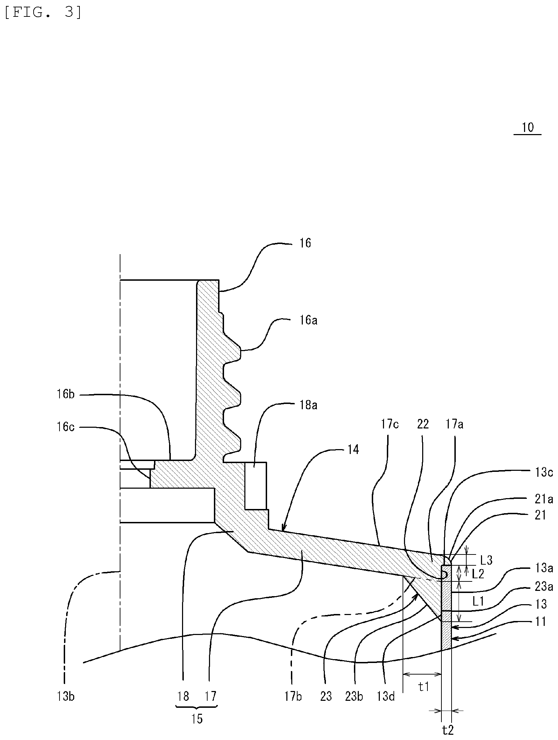

Fig. 1 illustrates a side view of a tube container 10 according to a first embodiment of the present invention. Fig. 2 illustrates a plan view of the tube container 10 as viewed from above. Fig. 3 illustrates a cross-sectional view of the tube container 10.

The tube container 10 includes a container body 11 that stores contents and a cap (not illustrated) attached to the container body 11.

The contents of the tube container 10 are not particularly limited, but the contents are, for example, viscous substances such as cosmetics or food.

The container body 11 includes a tubular sleeve 13 and a head 14 fixed to one end portion 13a in an axial direction of the sleeve 13.

The sleeve 13 is a tube formed by cutting a tube body, which is continuously formed by extrusion molding or the like, at a predetermined length in the axial direction. The sleeve 13 is made of synthetic resin.

In the sleeve 13 alone, the one end portion 13a and the other end portion (not illustrated) in the axial direction are open.

The opening at the one end portion 13a of the sleeve 13 is closed by fixing the head 14 to the one end portion 13a.

The opening at the other end portion of the sleeve 13 is closed by fixing the other end portion by a method, such as welding, in a state where the inner surfaces facing each other at the other end portion are brought into contact with each other.

In Figs. 1 and 3, the tube container 10 is in a normal standing state in which the tube container 10 is erected such that an axis 13b of the sleeve 13 is directed in the vertical direction.

The sleeve 13 has a cylindrical shape as a single body after the tube body is cut, but forms a container body portion, which is a body portion of the container body 11, when the container body 11 is formed by being connected to the head 14.

When viewed from the head 14 side in the axial direction of the sleeve 13 as illustrated in Fig. 2, the sleeve 13 is formed in a quadrangular shape with four curved corner portions 25 so as to follow the shape of the head 14. More specifically, the sleeve 13 is a tubular body having a rectangular shape as viewed in the axial direction. The axis 13b is located at the center of the quadrangular sleeve 13.

When viewed from the head 14 side in the axial direction, the basic shape of the sleeve 13 is a quadrangle, but in a lower portion of the sleeve 13, the sleeve 13 has a flat shape that gradually tapers toward the other end portion.

The head 14 includes a plate-shaped base portion 15 and a tubular mouth portion 16 erected from the base portion 15. The head 14 is a component formed separately from the sleeve 13. The head 14 is made of synthetic resin.

The base portion 15 includes a shoulder portion 17 extending radially inward of the sleeve 13 from the one end portion 13a of the sleeve 13 and a tubular upper extending portion 18 extending radially inward and upward from a central portion of the shoulder portion 17.

The head 14 is fixed to the one end portion 13a of the sleeve 13 via a radially outer peripheral edge portion 17a of the shoulder portion 17.

The mouth portion 16 is erected upward from an upper end portion of the upper extending portion 18. The mouth portion 16 has a tubular shape disposed coaxially with the axis 13b. The contents of the container body 11 are discharged from the mouth portion 16. The cap closes the mouth portion 16.

On an outer periphery of the mouth portion 16, an outer peripheral engaging portion 16a with which the cap (not illustrated) is engaged is provided. The outer peripheral engaging portion 16a is a male screw portion.

At a lower end portion of the mouth portion 16, a bottom plate portion 16b extending radially inward from an inner peripheral surface of the mouth portion 16 and a hole 16c passing through the bottom plate portion 16b in the axial direction (vertical direction) are provided.

On the outer periphery of the upper extending portion 18 below the mouth portion 16, a stopper portion 18a that regulates the rotation position of the cap, which is screwed to the outer peripheral engaging portion 16a, to a predetermined position is provided.

Referring to Figs. 1 and 3, in the head 14, the peripheral edge portion 17a of the shoulder portion 17 is fixed to the one end portion 13a of the sleeve 13.

The one end portion 13a is a quadrangular tubular portion linearly extending in the axial direction of the sleeve 13. The one end portion 13a is an upper end portion of the sleeve 13.

The shoulder portion 17 obliquely extends radially inward and upward from the one end portion 13a.

The peripheral edge portion 17a of the shoulder portion 17 includes a flange portion 21 fixed to an axial end surface 13c of the one end portion 13a and an outer peripheral portion 22 fixed to an inner peripheral surface 13d of the one end portion 13a below the flange portion 21.

In addition, the head 14 includes a protruding portion 23 protruding downward from a lower surface 17b of the peripheral edge portion 17a of the shoulder portion 17. In Fig. 3, the lower surface 17b is illustrated by an imaginary line. The protruding portion 23 is provided so as to follow the entire periphery of the inner peripheral surface 13d of the one end portion 13a, and has a quadrangular annular shape as viewed in the axial direction of the sleeve 13.

The flange portion 21 is an annular portion protruding radially outward with respect to the outer peripheral portion 22 in an upper portion of the peripheral edge portion 17a. The flange portion 21 has a quadrangular shape following the one end portion 13a when viewed in the axial direction of the sleeve 13.

In the flange portion 21, a lower surface of the flange portion 21 is fixed to the end surface 13c of the one end portion 13a by welding. The end surface 13c is an upper end surface of the one end portion 13a.

A side surface and an upper surface of an outer end portion of the flange portion 21 are chamfered into a curved shape by a chamfered portion 21a. The curvature radius of the chamfered portion 21a is equal to a plate thickness t2 of the one end portion 13a or smaller than the plate thickness t2 of the one end portion 13a. Note that the chamfered portion 21a may not be provided, and a corner portion of the flange portion 21 may be used as an edge.

A portion on the radially inner side from the chamfered portion 21a on an upper surface of the shoulder portion 17 is a flat surface portion 17c.

A lower end of an outer peripheral surface of the flange portion 21 is flush with an outer peripheral surface of the one end portion 13a.

The outer peripheral portion 22 of the peripheral edge portion 17a extends linearly in the vertical direction along the inner peripheral surface 13d of the one end portion 13a. The outer peripheral portion 22 is a step portion in which the peripheral edge portion 17a is recessed radially inward with respect to the flange portion 21, and extends from the lower surface of the flange portion 21 to a lower end of the peripheral edge portion 17a. The outer peripheral portion 22 has a quadrangular shape following the one end portion 13a when viewed in the axial direction of the sleeve 13. The outer peripheral portion 22 is fixed to the inner peripheral surface 13d of the one end portion 13a by welding.

The outer peripheral surface 23a of the protruding portion 23 extends linearly in the vertical direction along the inner peripheral surface 13d of the one end portion 13a. The outer peripheral surface 23a and the outer peripheral portion 22 of the peripheral edge portion 17a have the same diameter, and the outer peripheral surface 23a is continuous with the outer peripheral portion 22. The outer peripheral surface 23a of the protruding portion 23 is fixed to the inner peripheral surface 13d of the one end portion 13a by welding.

As illustrated in Fig. 3, in a cross-sectional view orthogonal to the axial direction of the sleeve 13, a protruding-portion inner peripheral surface 23b, which is an inner peripheral surface of the protruding portion 23, extends linearly and obliquely downward and radially outward from the lower surface 17b of the peripheral edge portion 17a and is connected to a lower end of the outer peripheral surface 23a. That is the protruding-portion inner peripheral surface 23b is an inclined surface extending linearly so as to be gradually positioned radially outward toward a lower side.

Therefore, a thickness t1 of the protruding portion 23 in the radial direction gradually decreases toward the lower side. In the present embodiment, since the protruding-portion inner peripheral surface 23b extends linearly and obliquely instead of a curved shape protruding upward (in a curved shape in which the protruding-portion inner peripheral surface 23b in Fig. 3 is recessed toward the flange portion 21 side), the large thickness t1 can be secured over the entire length direction (height direction) of the protruding portion 23.

The thickness t1 of the protruding portion 23 is larger than the plate thickness t2 of the one end portion 13a.

In the vertical direction, a length L1 of the protruding portion 23 is longer than a length L2 of the outer peripheral portion 22 of the peripheral edge portion 17a.

In the vertical direction, the length L2 of the outer peripheral portion 22 is longer than a length L3 of the flange portion 21.

In this manner, in the head 14, the peripheral edge portion 17a of the shoulder portion 17 is fixed to the one end portion 13a extending linearly in the axial direction of the sleeve 13, and the one end portion 13a is not bent radially inward of the sleeve 13. Therefore, the formation of a large, curved surface portion can be avoided at a connection portion (fixing portion) between the peripheral edge portion 17a and the one end portion 13a of the head 14.

In addition, in the head 14, the flange portion 21 is fixed to the axial end surface 13c of the one end portion 13a, and the outer peripheral portion 22 and the outer peripheral surface 23a of the protruding portion 23 are fixed to the inner peripheral surface 13d of the one end portion 13a. As a result, the head 14 can be fixed to the one end portion 13a in the axial direction and the radial direction, and a large area of the fixing portion can be secured. Therefore, even if the one end portion 13a is linear, the head 14 can be firmly fixed to the sleeve 13.

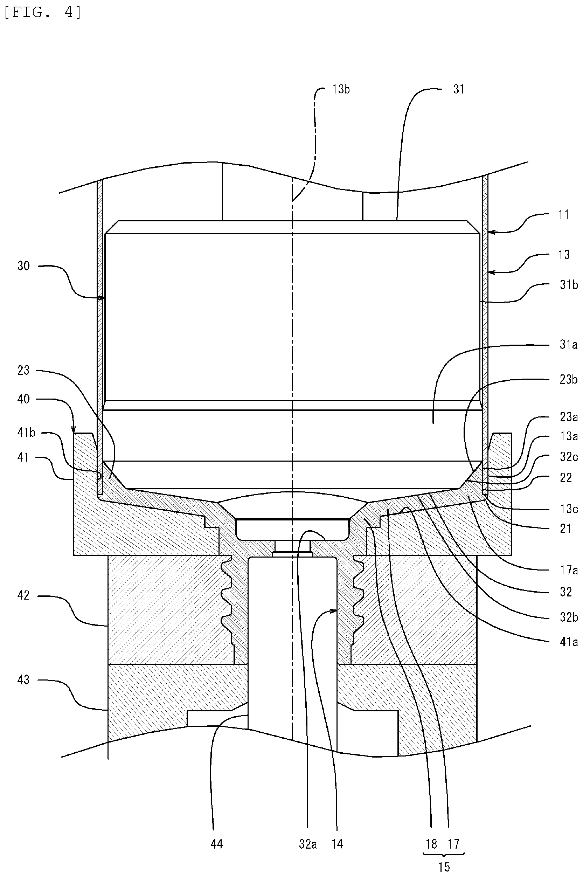

Fig. 4 illustrates a view for explaining an example of a method for manufacturing the container body 11. Fig. 4 illustrates a state in a forming step, which will be described later.

The container body 11 is manufactured by compression molding using a mandrel 30 and a mold 40.

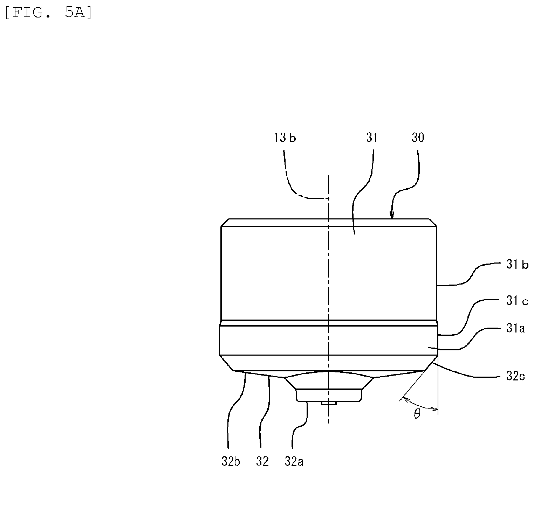

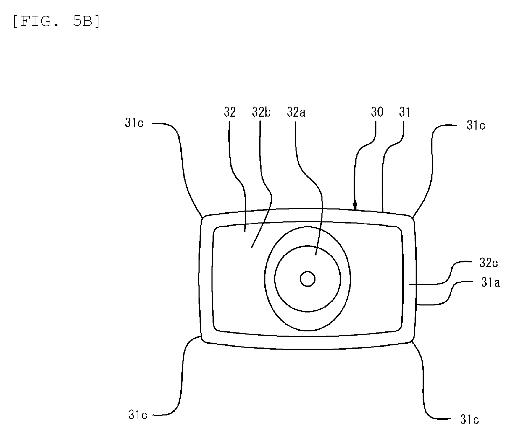

Fig. 5A illustrates a side view of the mandrel 30. Fig. 5B illustrates a bottom view of the mandrel 30 as viewed from below.

Referring to Figs. 4, 5A, and 5B, the mandrel 30 includes a block-shaped mandrel body portion 31 to be inserted into the sleeve 13 and a head forming portion 32 formed on a lower surface of the mandrel body portion 31.

On an outer periphery of a lower portion of the mandrel body portion 31, a sleeve forming portion 31a to be fitted to an inner periphery of the sleeve 13 is provided. In addition, on the outer periphery of the mandrel body portion 31, a relief portion 31b formed so as to have a smaller diameter than that of the sleeve forming portion 31a is provided above the sleeve forming portion 31a.

As illustrated in Fig. 5B, when viewed in the axial direction of the sleeve 13, the sleeve forming portion 31a has a quadrangular shape following an inner peripheral shape of the sleeve 13. Four corner portions of the quadrangle of the sleeve forming portion 31a are forming corner portions 31c for forming the four corner portions 25 of the sleeve 13. The forming corner portions 31c are formed in a curved shape following an inner surface of the corner portions 25.

The head forming portion 32 includes a center side forming portion 32a having a shape following an inner surface of the upper extending portion 18 and an inner surface of the bottom plate portion 16b, and a shoulder-portion forming portion 32b having a shape following an inner surface of the shoulder portion 17.

On an outer peripheral portion of the shoulder-portion forming portion 32b, a protruding-portion forming portion 32c having a shape following the protruding-portion inner peripheral surface 23b is provided.

The protruding-portion forming portion 32c is a chamfered portion in which an outer peripheral edge of a lower surface portion of the mandrel body portion 31 is linearly and obliquely chamfered. A chamfering angle θ of the chamfered portion is, for example, 40° with respect to a straight line parallel to the axis 13b.

The protruding-portion forming portion 32c is provided on the entire periphery of the outer peripheral portion of the shoulder-portion forming portion 32b. By providing the protruding-portion forming portion 32c, which is an inclined surface, the outer peripheral portion of the shoulder-portion forming portion 32b gradually tapers toward the lower side.

The mold 40 includes a first mold 41 including a base-portion forming portion 41a having a shape following an outer surface of the upper extending portion 18 and an outer surface of the shoulder portion 17, a second mold 42 having a shape corresponding to the outer periphery of the mouth portion 16, a third mold 43 having a shape corresponding to a tip of the mouth portion 16, and a fourth mold 44 having a shape corresponding to an inner periphery of the mouth portion 16.

The first mold 41 includes a tubular outer peripheral guide portion 41b that receives an outer periphery of the one end portion 13a of the sleeve 13. The outer peripheral guide portion 41b extends linearly in the axial direction along the one end portion 13a.

The method for manufacturing the container body 11 includes an insertion step of inserting the mandrel 30 into the sleeve 13, a material fitting step of fitting the material of the head 14 punched out into the sleeve 13 after the insertion step, and a forming step of, as illustrated in Fig. 4, lowering the mandrel 30 in the sleeve 13 to form the corner portions 25 by the forming corner portions 31c and forming the material of the head 14 using a cavity formed between the mandrel 30 and the mold 40 to form the head 14, and fixing the peripheral edge portion 17a and the protruding portion 23 to the one end portion 13a.

In the insertion step, the mandrel 30 is inserted into the sleeve 13 by inserting the head forming portion 32 from the opening at the upper end portion (the other end portion), which is not illustrated, of the sleeve 13 in Fig. 4. At this time, the mandrel 30 can be inserted into the sleeve 13 such that the protruding-portion forming portion 32c, which is a linear chamfered portion, is brought into contact with an inner periphery of the opening at the upper end portion of the sleeve 13. Therefore, the mandrel 30 can be prevented from being caught by the sleeve 13 when the mandrel 30 is inserted into the sleeve 13, deformation of the sleeve 13 can be prevented, and the mandrel 30 can be smoothly inserted into the sleeve 13.

In the material fitting step, the material of the head 14 is punched out in a heated and softened state, and fitted into the sleeve 13.

In the forming step, a portion of the sleeve 13 on the one end portion 13a side is sandwiched between the forming corner portions 31c and the first mold 41, thereby forming the four corner portions 25.

In the present embodiment, the curvature radius of the corner portions 25 is set to be relatively small, and the curvature radius of the corner portions 25 is, for example, 1.5 mm or less.

When the curvature radius of the corner portions 25 is small, the curvature radius of the forming corner portions 31c is also small, and the forming corner portions 31c are easily caught by the sleeve 13 when the mandrel 30 is inserted into the sleeve 13. In the present embodiment, since the mandrel 30 includes the protruding-portion forming portion 32c, which is a linear chamfered portion, the mandrel 30 can be prevented from being caught by the sleeve 13 even when the curvature radius of the forming corner portions 31c is small.

In addition, in the forming step, the material of the head 14 softened by heating is compressed between the mandrel 30 and the mold 40 as illustrated in Fig. 4, whereby the head 14 is formed and the head 14 is welded to the one end portion 13a.

In the forming step, the one end portion 13a of the sleeve 13 is radially received by the outer peripheral guide portion 41b of the first mold 41. The flange portion 21 is formed of the material of the head 14 filled in the cavity between the end surface 13c of the one end portion 13a and the base-portion forming portion 41a. In the forming step, since the inclined protruding-portion forming portion 32c faces the cavity for forming the flange portion 21, the material of the head 14 can be favorably filled in the cavity for forming the flange portion 21.

In a case where the curvature radius of the corner portions 25 is small, if a bent portion in which the one end portion 13a is bent radially inward is provided in the sleeve 13, the deformation load on the sleeve 13 increases at this portion, and defects easily occur in the shape of the sleeve 13 at the corner portions 25 of the one end portion 13a. In this case, in the forming step, a phenomenon may occur in which the material of the head 14 flows around the outside of the sleeve 13.

In the present embodiment, since the one end portion 13a is linear and is not bent radially inward, the corner portions 25 of the one end portion 13a can be formed into a proper shape. Therefore, a phenomenon in which the material of the head 14 flows around the outside of the sleeve 13 can be avoided.

After the forming step, the container body 11 is taken out of the mandrel 30 and the mold 40. The other end portion of the sleeve 13 is closed by means such as welding after the container body 11 is filled with the contents.

In the container body 11, since the head 14 includes the protruding portion 23 and the protruding portion 23 is fixed to the one end portion 13a, the area of the fixing portion between the head 14 and the one end portion 13a can be increased.

In addition, as illustrated in Fig. 3, since the thickness t1 of the protruding portion 23 is larger than the plate thickness t2 of the one end portion 13a and is thick, the temperature of the protruding portion 23 is maintained to some extent when the temperature of the head 14 decreases after forming. Therefore, the protruding portion 23 can be favorably welded to the one end portion 13a.

Furthermore, since the length L1 of the protruding portion 23 is longer than the length L2 of the outer peripheral portion 22 in the vertical direction, the temperature of the protruding portion 23 can be favorably maintained during welding.

As described above, according to the first embodiment to which the present invention is applied, the tube container 10 includes the tubular sleeve 13 and the head 14 including the plate-shaped base portion 15 and the mouth portion 16 erected from the base portion 15 and closing the opening at the one end portion 13a of the sleeve 13. In the tube container 10, the peripheral edge portion 17a of the base portion 15 is fixed to the one end portion 13a, and the sleeve 13 is formed in a quadrangular shape with four corner portions 25 when viewed from the head 14 side in the axial direction of the sleeve 13. The one end portion 13a linearly extends in the axial direction of the sleeve 13, and the peripheral edge portion 17a includes the flange portion 21 fixed to the axial end surface 13c of the one end portion 13a and the outer peripheral portion 22 fixed to the inner peripheral surface 13d of the one end portion 13a. The head 14 includes the annular protruding portion 23 protruding downward from the base portion 15. The outer peripheral surface 23a of the protruding portion 23 is fixed to the inner peripheral surface 13d of the one end portion 13a below the outer peripheral portion 22, and on the inner surface side of the four corner portions 25, the protruding-portion inner peripheral surface 23b, which is the inner peripheral surface of the protruding portion 23, is an inclined surface extending linearly so as to be gradually positioned radially outward toward the lower side.

With this configuration, the head 14 is fixed to the axial end surface 13c of the one end portion 13a of the sleeve 13 by the flange portion 21 of the peripheral edge portion 17a of the base portion 15, and is fixed to the inner peripheral surface 13d of the one end portion 13a of the sleeve 13 by the outer peripheral portion 22 of the peripheral edge portion 17a of the base portion 15 and the outer peripheral surface 23a of the protruding portion 23. As a result, the peripheral edge portion 17a of the head 14 can be fixed to the one end portion 13a of the sleeve 13 in the axial direction and the radial direction of the sleeve 13, and the fixing strength between the sleeve 13 and the head 14 can be increased. In addition, since the one end portion 13a of the sleeve 13 linearly extends in the axial direction of the sleeve 13 and is not bent in the radial direction, defects in the shape of the sleeve 13 hardly occur even if the curvature radius of the four corner portions 25 at the one end portion 13a is made small. That is, the material of the head 14 can be prevented from flowing around the outside of the sleeve 13, and wrinkles can be prevented from being formed in the sleeve 13 at the bent portion that is bent in the radial direction. Therefore, the curvature radius of the four corner portions 25 of the sleeve 13 can be made small. Furthermore, on the inner surface side of the four corner portions 25 of the sleeve 13, the shape of the mandrel 30 that forms the protruding-portion inner peripheral surface 23b is an inclined surface (protruding-portion forming portion 32c) extending linearly following the inclined surface of the protruding-portion inner peripheral surface 23b. Therefore, the mandrel 30 can be inserted into the sleeve 13 via the inclined surface of the mandrel 30 when the mandrel 30 is inserted into the sleeve 13, and the mandrel 30 can be prevented from being caught by the corner portions 25 of the sleeve 13. Therefore, deformation of the sleeve 13 during forming of the sleeve 13 can be prevented.

In addition, the protruding-portion inner peripheral surface 23b is provided on the entire inner periphery of the protruding portion 23.

With this configuration, since the protruding-portion inner peripheral surface 23b is provided on the entire inner periphery of the protruding portion 23, the entire periphery of the shape of the mandrel 30 that forms the protruding-portion inner peripheral surface 23b is an inclined surface (protruding-portion forming portion 32c) similar to the protruding-portion inner peripheral surface 23b. Therefore, the mandrel 30 can be inserted into the sleeve 13 via the inclined surface provided on the entire periphery of the mandrel 30, and the mandrel 30 can be prevented from being caught by the corner portions 25 of the sleeve 13.

In addition, the head 14 is fixed to 13a by welding. The thickness t1 of the protruding portion 23 is larger than the plate thickness t2 of the one end portion 13a in a cross-sectional view orthogonal to the axial direction of the sleeve 13, and the length L1 of the protruding portion 23 is longer than the length L2 of the outer peripheral portion 22 in the vertical direction.

With this configuration, the temperature of the protruding portion 23 can be maintained in a state suitable for welding, and the head 14 can be favorably welded to the one end portion 13a.

In addition, the mandrel 30 to be used to manufacture the tube container 10 includes the forming corner portions 31c for forming the corner portions 25, the head forming portion 32 having a shape following the head 14, and the protruding-portion forming portion 32c provided on the outer peripheral portion of the head forming portion 32 to form the protruding portion 23. The protruding-portion forming portion 32c is a linear chamfered portion following the protruding-portion inner peripheral surface 23b.

With this configuration, when the mandrel 30 is inserted into the sleeve 13, the mandrel 30 can be smoothly inserted into the sleeve 13 using the protruding-portion forming portion 32c, which is a linear chamfered portion, as a guide.

Furthermore, the method for manufacturing the tube container 10 using the mandrel 30 includes the insertion step of inserting the mandrel 30 into the sleeve 13 via the protruding-portion forming portion 32c, and the forming step of forming the corner portions 25 by the forming corner portions 31c and forming the material of the head 14 using the cavity formed between the mold 40 and the mandrel 30 to form the head 14, and fixing the peripheral edge portion 17a and the protruding portion 23 to the one end portion 13a.

With this configuration, the mandrel 30 can be smoothly inserted into the sleeve 13 in the insertion step using the protruding-portion forming portion 32c, which is a chamfered portion for forming the protruding portion 23 in the forming step.

Although one embodiment of the present invention has been described above, the present invention is not limited to the specific embodiment, and various modifications and changes can be made within the scope of the gist of the present invention described in the claims unless otherwise limited in the above description. For example, the configuration of the above-described embodiment can be appropriately added or deleted, and the configuration of one embodiment can be provided in another embodiment. In addition, the effects of the above embodiment are merely examples of the effects caused by the present invention, and this does not mean that the effects of the present invention are limited to the above effects.

In the above embodiment, the container body 11 has been described as being manufactured by compression molding, but the present invention is not limited thereto. The container body 11 may be manufactured, for example, by injection molding in which a molten resin to be a material of the head 14 is injected into a cavity.

In the above embodiment, the protruding-portion inner peripheral surface 23b has been described as being provided on the entire periphery of the inner peripheral surface of the protruding portion 23, but the present invention is not limited thereto. For example, the protruding-portion inner peripheral surface 23b, which is a linear inclined surface, may be provided on the inner surface side of only the four corner portions 25, and the other portion of the inner peripheral surface of the protruding portion 23 may be a curved inclined surface.

In addition, the sleeve 13 may have a laminate structure in which a metal sheet made of, for example, an aluminum-based material is laminated on the body of the sleeve 13 made of synthetic resin. In this case, since the one end portion 13a of the sleeve 13 extends linearly and the one end portion 13a having the laminate structure is not bent radially inward, wrinkles and folds can be prevented from being formed at the one end portion 13a.

### Second Embodiment

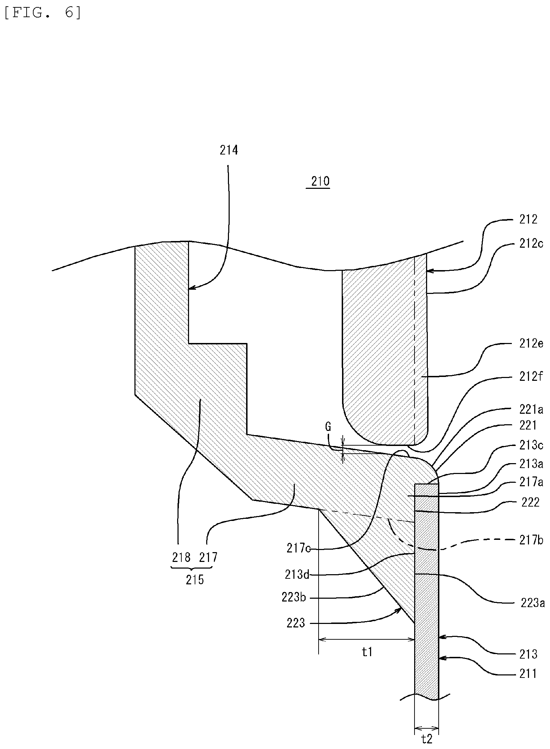

Hereinafter, a second embodiment to which the present invention is applied will be described with reference to Fig. 6.

Fig. 6 illustrates an enlarged cross-sectional view of a connection portion between a head 214 and a sleeve 213 in the second embodiment.

A tube container 210 includes a container body 211 that stores contents and a cap 212 attached to the container body 211.

The container body 211 includes a tubular sleeve 213 and a head 214 fixed to one end portion 213a in an axial direction of the sleeve 213.

The sleeve 213 is a tube formed by cutting a tube body, which is continuously formed by extrusion molding or the like, at a predetermined length in the axial direction. The sleeve 213 is made of synthetic resin.

In the sleeve 213 alone, the one end portion 213a and the other end portion (not illustrated) in the axial direction are open.

The opening at the one end portion 213a of the sleeve 213 is closed by fixing the head 214 to the one end portion 213a.

The opening at the other end portion of the sleeve 213 is closed by fixing the other end portion by a method, such as welding, in a state where the inner surfaces facing each other at the other end portion are brought into contact with each other.

When viewed in the axial direction, the sleeve 213 has a shape following the outer shape of the head 214. The outer shape of the head 214 may be circular or rectangular as viewed in the axial direction. The shape of the sleeve 213 is a flat shape that gradually tapers toward the other end portion at a lower portion of the sleeve 213.

In Fig. 6, the tube container 210 is in a normal standing state in which the tube container 210 is erected such that an axis of the sleeve 213 (similar to the axis 13b in Fig. 3) is directed in the vertical direction.

The head 214 includes a plate-shaped base portion 215 and a tubular mouth portion erected from the base portion 215. Although not illustrated in Fig. 6, the mouth portion is formed similarly to the mouth portion 16 illustrated in Figs. 1 and 3.

The head 214 is a component formed separately from the sleeve 213. The head 214 is made of synthetic resin.

The base portion 215 includes a shoulder portion 217 extending radially inward of the sleeve 213 from the one end portion 213a of the sleeve 213 and a tubular upper extending portion 218 extending radially inward and upward from a central portion of the shoulder portion 217.

The head 214 is fixed to the one end portion 213a of the sleeve 213 via a radially outer peripheral edge portion 217a of the shoulder portion 217.

The mouth portion is erected upward from the upper end portion of the upper extending portion 218. The mouth portion has a tubular shape disposed coaxially with the sleeve 213, and is disposed on the axis of the sleeve 213. In addition, on an outer periphery of the mouth portion, an outer peripheral engaging portion (see the outer peripheral engaging portion 16a in Fig. 3) with which the cap 212 is engaged is provided. The outer peripheral engaging portion is a male screw portion.

At a lower end portion of the mouth portion, a bottom plate portion (similar to the bottom plate portion 16b in Fig. 3) extending radially inward from an inner peripheral surface of the mouth portion and a hole (similar to the hole 16c in Fig. 3) passing through the bottom plate portion in the axial direction (vertical direction) are provided.

To the mouth portion, a check valve (not illustrated) that prevents backflow of contents and a nozzle (not illustrated) are attached. The contents of the container body 211 are discharged from the opening at the tip (upper end) of the nozzle through the mouth portion.

The cap 212 includes a tubular attachment portion to be attached to the mouth portion, a disk-shaped upper wall portion (not illustrated) closing the opening of the nozzle from above, and a tubular peripheral wall portion 212c surrounding the attachment portion from the periphery.

The attachment portion of the cap 212 extends downward from a central portion of the upper wall portion. The peripheral wall portion 212c extends downward from a peripheral edge portion of the upper wall portion. The attachment portion and the peripheral wall portion are disposed coaxially with the sleeve 213.

The cap 212 is attached to the mouth portion by engaging an inner peripheral engaging portion, which is a female screw portion provided on an inner periphery of the attachment portion, with the outer peripheral engaging portion (see the outer peripheral engaging portion 16a in Fig. 3).

In the head 214, the peripheral edge portion 217a of the shoulder portion 217 is fixed to one end portion 213a of the sleeve 213.

The one end portion 213a is a tubular portion linearly extending in the axial direction of the sleeve 213. The one end portion 213a is an upper end portion of the sleeve 213.

The shoulder portion 217 obliquely extends radially inward and upward from the one end portion 213a.

The peripheral edge portion 217a of the shoulder portion 217 includes a flange portion 221 fixed to an axial end surface 213c of the one end portion 213a and an outer peripheral portion 222 fixed to an inner peripheral surface 213d of the one end portion 213a below the flange portion 221.

In addition, the head 214 includes a protruding portion 223 protruding downward from a lower surface 217b of the peripheral edge portion 217a of the shoulder portion 217. In Fig. 6, the lower surface 217b is illustrated by an imaginary line. The protruding portion 223 has an annular shape disposed coaxially with the sleeve 213.

The flange portion 221 is an annular portion protruding radially outward with respect to the outer peripheral portion 222 in an upper portion of the peripheral edge portion 217a.

In the flange portion 221, a lower surface of the flange portion 221 is fixed to the end surface 213c of the one end portion 213a by welding. The end surface 213c is an upper end surface of the one end portion 213a.

A side surface and an upper surface of an outer end portion of the flange portion 221 are chamfered into a curved shape by a chamfered portion 221a. The curvature radius of the chamfered portion 221a is equal to a plate thickness t2 of the one end portion 213a or smaller than the plate thickness t2 of the one end portion 213a. Note that the chamfered portion 221a may not be provided, and a corner portion of the flange portion 221 may be used as an edge.

A portion on the radially inner side of the chamfered portion 221a on an upper surface of the shoulder portion 217 is a flat surface portion 217c.

A lower end of an outer peripheral surface of the flange portion 221 is flush with an outer peripheral surface of the one end portion 213a.

The outer peripheral portion 222 of the peripheral edge portion 217a extends linearly in the vertical direction along the inner peripheral surface 213d of the one end portion 213a. The outer peripheral portion 222 is a step portion in which the peripheral edge portion 217a is recessed radially inward with respect to the flange portion 221, and extends from the lower surface of the flange portion 221 to a lower end of the peripheral edge portion 217a. The outer peripheral portion 222 is fixed to the inner peripheral surface 213d of the one end portion 213a by welding.

The outer peripheral surface 223a of the protruding portion 223 extends linearly in the vertical direction along the inner peripheral surface 213d of the one end portion 213a. The outer peripheral surface 223a and the outer peripheral portion 222 of the peripheral edge portion 217a have the same diameter, and the outer peripheral surface 223a is continuous with the outer peripheral portion 222. The outer peripheral surface 223a of the protruding portion 223 is fixed to the inner peripheral surface 213d of the one end portion 213a by welding.

As illustrated in Fig. 6, in a cross-sectional view orthogonal to the axial direction of the sleeve 213, a protruding-portion inner peripheral surface 223b, which is an inner peripheral surface of the protruding portion 223, extends obliquely and linearly downward and radially outward from the lower surface 217b of the peripheral edge portion 217a and is connected to a lower end of the outer peripheral surface 223a. Therefore, a thickness t1 of the protruding portion 223 in the radial direction gradually decreases toward the lower side. In the second embodiment, since the protruding-portion inner peripheral surface 223b extends obliquely and linearly instead of a curved shape protruding upward, the large thickness t1 of the protruding portion 223 can be secured over the entire length direction (height direction) of the protruding portion 223.

In addition, the thickness t1 of the protruding portion 223 is larger than the plate thickness t2 of the one end portion 213a.

In this manner, in the head 214, the peripheral edge portion 217a of the shoulder portion 217 is fixed to the one end portion 213a extending linearly in the axial direction of the sleeve 213, and the one end portion 213a is not bent radially inward of the sleeve 213. Therefore, the formation of a large, curved surface portion can be avoided at a connection portion (fixing portion) between the peripheral edge portion 217a and the one end portion 213a of the head 214.

The outer diameter of the peripheral wall portion 212c of the cap 212 is substantially the same as the outer diameter of the sleeve 213, and the outer peripheral surface of the peripheral wall portion 212c and the outer peripheral surface of the sleeve 213 are continuous, whereby the tube container 210 has a neat appearance.

Specifically, the radially outer portion of the peripheral wall portion 212c of the cap 212 is an overlapping portion 212e that overlaps the position of the one end portion 213a of the sleeve 213 in the radial direction. Note that the overlapping portion 212e is a portion outside the imaginary line shown in the peripheral wall portion 212c in Fig. 6.

A lower end portion 212f of the peripheral wall portion 212c faces the flat surface portion 217c provided on the upper surface of the shoulder portion 217 of the base portion 215 outside the mouth portion from above.

As described above, when the peripheral wall portion 212c of the cap 212 includes the overlapping portion 212e, the lower end portion 212f of the peripheral wall portion 212c faces the flat surface portion 217c of the shoulder portion 217, whereby a vertical gap G between the lower end portion 212f and the shoulder portion 217 can be reduced. As a result, the sense of integration between the peripheral wall portion 212c of the cap 212 and the sleeve 213 can be increased, which aesthetically improves the appearance of the tube container 210.

The container body 211 is manufactured in the same manner as in Fig. 4 by compression molding using a mandrel inserted into the sleeve 213 and molds corresponding to the shape of an outer surface of the shoulder portion 217 and the shape of the mouth portion of the head 214.

According to the second embodiment, the cap 212 including the attachment portion attached to the mouth portion of the head 214 and the tubular peripheral wall portion 212c surrounding the attachment portion from the periphery is provided, the peripheral wall portion 212c is provided so as to overlap the position of the one end portion 213a in the radial direction, and the lower end portion 212f of the peripheral wall portion 212c faces the flat surface portion 217c provided on the upper surface of the base portion 215 outside the mouth portion from above.

With this configuration, when the peripheral wall portion 212c of the cap 212 is provided so as to overlap the position of the one end portion 213a in the radial direction, the lower end portion 212f of the peripheral wall portion 212c faces the flat surface portion 217c of the upper surface of the base portion 215, whereby the gap G between the lower end portion 212f of the peripheral wall portion 212c and the upper surface of the base portion 215 can be reduced. Therefore, the appearance of the tube container 210 can be improved, and foreign substances can be prevented from entering the cap 212 through the gap G between the lower end portion 212f of the peripheral wall portion 212c and the upper surface of the base portion 215.

### Reference Signs List

10, 210 Tube container
13, 213 Sleeve
13a, 213a One end portion
13c, 213c End surface
13d, 213d Inner peripheral surface
14, 214 Head
15, 215 Base portion
16 Mouth portion
17a, 217a Peripheral edge portion
21, 221 Flange portion
22, 222 Outer peripheral portion
23, 223 Protruding portion
23a, 223a Outer peripheral surface
23b, 223b Protruding-portion inner peripheral surface
25 Corner portion
30 Mandrel
31c Forming corner portion
32 Head forming portion
40 Mold
t1 Thickness (thickness of protruding portion)
t2 Plate thickness (plate thickness of one end portion)
L1 Length (length of protruding portion)
L2 Length (length of outer peripheral portion)

## Claims

1. A tube container comprising: a tubular sleeve; and a head including a plate-shaped base portion and a mouth portion erected from the base portion, and closing an opening at one end portion of the sleeve, the base portion having a peripheral edge portion fixed to the one end portion, the sleeve being formed in a quadrangular shape with four corner portions as viewed from the head side in an axial direction of the sleeve,
wherein
the one end portion extends linearly in the axial direction of the sleeve,
the peripheral edge portion includes a flange portion fixed to an axial end surface of the one end portion and an outer peripheral portion fixed to an inner peripheral surface of the one end portion,
the head includes an annular protruding portion protruding downward from the base portion,
an outer peripheral surface of the protruding portion is fixed to the inner peripheral surface of the one end portion below the outer peripheral portion, and,
on an inner surface side of the four corner portions, a protruding-portion inner peripheral surface being an inner peripheral surface of the protruding portion is an inclined surface extending linearly so as to be gradually positioned radially outward toward a lower side.

2. The tube container according to claim 1, wherein the protruding-portion inner peripheral surface is provided on an entire inner periphery of the protruding portion.

3. The tube container according to claim 1, wherein
the head is fixed to the one end portion by welding,
a thickness of the protruding portion is larger than a plate thickness of the one end portion in a cross-sectional view orthogonal to the axial direction of the sleeve, and a length of the protruding portion is longer than a length of the outer peripheral portion in a vertical direction.

4. A mandrel to be used for manufacturing the tube container according to claim 1, the mandrel comprising:
a forming corner portion to form the corner portions; a head forming portion having a shape following the head; and a protruding-portion forming portion provided on an outer peripheral portion of the head forming portion to form the protruding portion,
wherein the protruding-portion forming portion is a linear chamfered portion following the protruding-portion inner peripheral surface.

5. A method for manufacturing a tube container using the mandrel according to claim 4, the method comprising:
an insertion step of inserting the mandrel into the sleeve via the protruding-portion forming portion; and
a forming step of forming the corner portions by the forming corner portion, forming a material of the head using a cavity formed between a mold and the mandrel to form the head, and fixing the peripheral edge portion and the protruding portion to the one end portion.
